# EUROPEAN PATENT APPLICATION

(11) **EP 1 170 045 A2**
(43) Date of publication of application: **09.01.2002**
(21) Application number: 01116326.8
(22) Date of filing: 05.07.2001
(51) Int. Cl.: A63F 13/10

(54) **Game system, storage medium, and entertainment apparatus**

(30) Priority: 06.07.2000 JP 2000205448
(71) Applicant: Sony Computer Entertainment Inc., Tokyo 107-0052 (JP)
(72) Inventor: Nagano, Eitaro, Tokyo 107-0052 (JP)
(74) Representative: Müller . Hoffmann & Partner Patentanwälte

(57) **Abstract**

An atmosphere judging unit 803 which accepts an atmosphere judging request issued from a game processing unit 802 acquires a status of a character who appears in a scene with reference to a character status table 811. Then, the atmosphere judging unit 803 judges an atmosphere of this scene with reference to an atmosphere judging rule 813. The information related to the judged atmosphere is represented via a display control unit 804 to a player. In a role playing game and the like, such a conceptional idea related to the atmospheres of the scenes can be handled in this manner.

## Description

### TECHNICAL FIELD

The present invention is related to a technique capable of improving reality in role playing games and the like.

### TECHNICAL BACKGROUND

Very recently, entertainment apparatuses such as video game machines are widely popularized in homes. In entertainment apparatuses, since game programs which are read out from storage media such as CD-ROMs and DVD-ROMs, or via communication media such as communication lines are executed, various sorts of games can be enjoyed.

Generally speaking, for instance, as to such a sort of games known as a role playing game (PRG), an adventure game (AVG), and a simulation game (SLG), virtual worlds are formed in these games. Then, since game players operate controllers and the like connected to the entertainment apparatuses with respect to characters appeared in these virtual worlds, the game players can cause these characters to act in various manners. In response to operation contents of the game players, the entertainment apparatuses may provide various story developments to the game players, while changing the contents of the game stories.

Among these sorts of games, there is such a game capable of handling various events which essentially occur in the realistic world, for example, a game story is changed in accordance with emotional feelings, attitudes, and the like of characters. In such a game, while statuses of one character such as emotional feelings and attitudes are processed in a data form, a game player is required to issue such operation contents which may reflect emotional feelings and attitudes of other characters.

### DISCLOSURE OF THE INVENTION

On the other hand, in general, in virtual worlds which are handled in stories of games, reproducibility of abstract conceptional ideas (for example, atmosphere of scene in realistic world) could not be sufficiently realized. For instance, in the case that a plurality of persons are collected in a realistic world, these persons should make speech and actions by considering not only personal emotional feelings/attitudes, but also atmospheres of the relevant scenes.

However, since the conceptional ideas such as the atmospheres of the scenes are not handled in the conventional games, the game players could not recognize the atmospheres of the scenes contained in the games, so that this factor may loose reality of these games.

An object of the present invention is to realize that in an application program operated on an information processing apparatus such as an entertainment apparatus, especially, in a game program, a conceptional idea related to an atmosphere of a scene can be handled.

To solve the above-described problem, a game system, according to the present invention, is featured by such a game system comprising: calculation means and storage means; in which: the calculation means performs a calculation based upon both a game program and data, which are stored in the storage means so as to produce a virtual world, and a character is caused to act within the virtual world so as to progress a game story; wherein: the calculation means judges an atmosphere of a scene of the virtual world, and represents information related to the judged atmosphere of the scene.

In this game system, while statuses of the respective characters who appear in the game are managed, the atmospheres of the scenes may be judged in response to the statuses of these characters who appear in this scene.

Alternatively, a sort of operations which can be carried out by a character may be changed based upon an atmosphere of a scene.

### BRIEF DESCRIPTION OF THE DRAWINGS

Fig. 1 is a diagram for representing an outer view of an entertainment apparatus according to an embodiment mode of the present invention.

Fig. 2 is a diagram for illustrating a controller 20 shown in Fig. 1.

Fig. 3 is a diagram for explaining such values which can be entered by employing operation shafts 31a and 32a of the controller 20 indicated in Fig. 1.

Fig. 4 is a schematic block diagram for representing an arrangement of the entertainment apparatus.

Fig. 5 is a diagram for explaining a data structure of an optical disk loaded on a disk loading unit.

Fig. 6 is a schematic block diagram for indicating a software structure constituted on the entertainment apparatus.

Fig. 7 is a diagram for explaining one example of a character status table 811.

Fig. 8 is a diagram for explaining one example of a character relationship table 812.

Fig. 9 is a diagram for explaining one example of an atmosphere judging rule 813.

Fig. 10 is a flow chart for explaining operations of an atmosphere judging unit 803 when an atmosphere judging process operation is requested by a game processing unit 802.

Fig. 11 is a diagram for showing an example of one scene of a game in which an atmosphere is expressed.

### BEST MODE FOR CARRYING OUT THE INVENTION

Subsequently, a description will now be made of an embodiment mode of the present invention.

First, a description is made of a hardware structure of an entertainment apparatus according to an embodiment mode of the present invention.

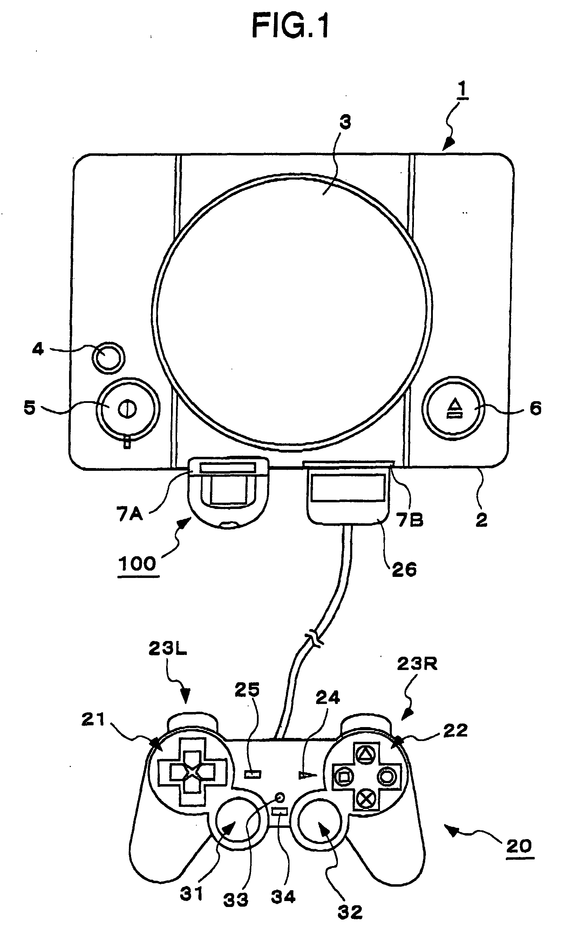

In Fig. 1, there is shown an outer view of the entertainment apparatus according to the embodiment mode of the present invention.

This entertainment apparatus reads out a game program which is recorded on an optical disk and the like such as a CD-ROM, and a DVD-ROM, and then, executes this read game program in response to an instruction issued from a game player. It should be noted that an execution of a game mainly implies the following operations. That is, in response to an instruction issued from a game player, an object to be operated (for example, object indicative of player character) is moved. This object is displayed on a display screen of a display apparatus (for instance, television apparatus) connected to the entertainment apparatus. While the object is moved, both a display of a moving image and a voice are controlled, so that this game is advanced.

As indicated in this drawing, a main body 2 of the entertainment apparatus 1 is provided with a disk loading (mounting) unit 3, a reset switch 4 for resetting a game, a power supply switch 5, a disk operation switch 6, and also, for example, two slot units 7A and 7B. The disk loading unit 3 is positioned at a center portion of this main body 2, and is used to load thereon an optical disk such as a CD-ROM and a DVD-ROM, corresponding to a recording medium for supplying an application program such as a television game, and multimedia data. The disk operation switch 6 is to manipulate loading of the optical disk.

Since two sets of controllers 20 may be connected to the slot units 7A and 7B, two persons of players may play games such as a fighting game (confrontation game) and the like. Also, a memory card apparatus 26 and/or a portable electronic appliance 100 may be loaded to these slot units 7A and 7B. The memory card apparatus 26 may save (store) thereinto game data, and may read therefrom the game data. The portable electronic appliance 100 can execute a game independent of the main body 2.

The controller 20 contains a first operation unit 21, a second operation unit 22, and an L-button 23L, and an R-button 23R, a start button 24, and a selection button 25. Furthermore, this controller 20 is provided with analog operation units 31/32 capable of performing analog operations, a mode selection switch 33 for selecting operation modes of these operation units 31/32, and a display unit 34 for displaying a selected operation mode.

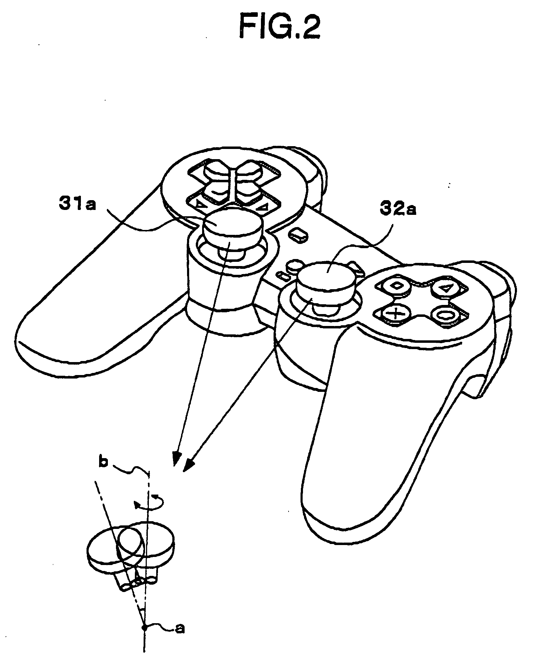

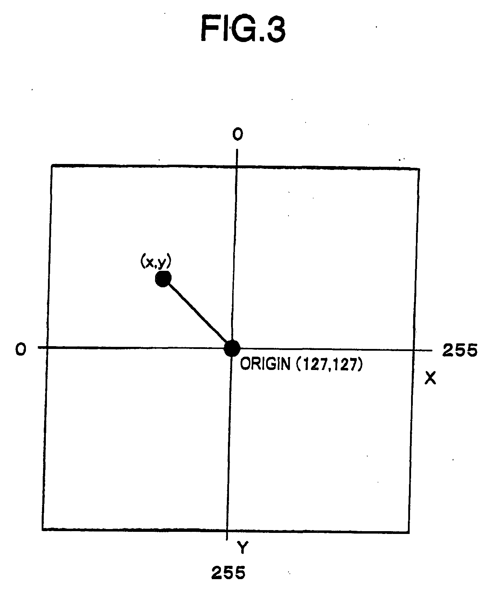

As shown in Fig. 2, the analog operation units 31 and 32 contain operation shafts 31a and 32a, which are constituted as follows. That is, these analog operation units 31 and 32 are tiltable around a predetermined fulcrum "a" with respect to a preselected axis "b" which passes through this fulcrum "a", and further, are rotatable under tilted condition. The controller 20 senses inclinations (gradients) of the operation shafts 31a and 32a with respect to the axis "b", and also senses inclination directions of the operation shafts 31a and 32a, and then outputs signals in correspondence with coordinate values on an X-Y coordinate system. These coordinate values are determined based upon these sensed inclinations and inclination directions. As indicated in Fig. 3, as to these coordinate values, a coordinate value along a Y (vertical) direction is expressed by a value of 256 steps defined from "0" to "255" in response to inclinations of the operation shafts 31a/32a along upper/lower directions, whereas a coordinate value along an X (horizontal) direction is expressed by a value of 256 steps defined from "0" to "255" in response to inclinations of the operation shafts 31a/32a along right/left directions.

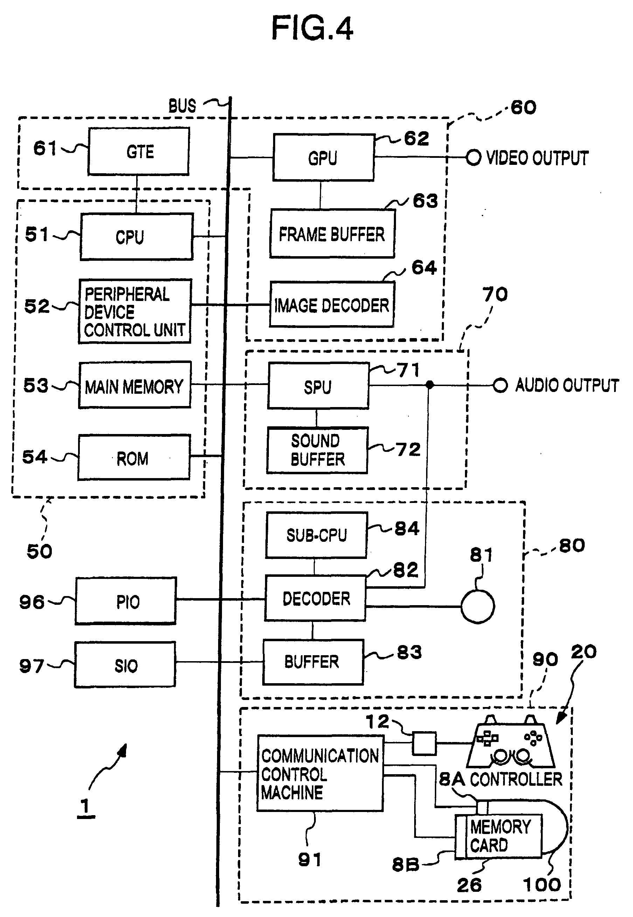

Next, Fig. 4 represents an arrangement of the entertainment apparatus 1.

As indicated in this drawing, this entertainment apparatus 1 is arranged by a control system 50, a graphic system 60, a sound system 70, an optical disk control unit 80, a communication control unit 90, and a bus BUS via which the above-described systems/units are connected to the entertainment apparatus 1. The control system 50 is constituted by a central processing unit (CPU) 51, and peripheral apparatus thereof. The graphic system 60 is constituted by a graphic processing unit (GPU) 62 for performing an image drawing in a frame buffer 63. The sound system 70 is constituted by a sound processing unit (SPU) 71 for producing an audio signal such as music sound and effect sound. The optical disk control unit 80 controls such an optical disk on which an application program and multimedia data are recorded. The communication control unit 90 controls signal inputs from the controller 20 into which an instruction is entered from a game player, and controls data input/output from either the memory card 26 or the portable electronic appliance 100, which stores thereinto setting of a game.

The control system 50 is equipped with the CPU 51, the peripheral device control unit 52, a main memory (main storage apparatus) 53, and a read-only memory (ROM) 54. The peripheral device control unit 52 executes an interrupt control and a control of a direct memory access (DMA) transfer operation. The ROM 54 stores thereinto such a program (so-called "operating system") used to manage the main memory 53, the graphic system 60, and the sound system 70. The main memory 53 is constituted by a random access memory (RAM).

The CPU 51 executes the operating system (OS) stored in the ROM 54 in order to control the overall system of this entertainment apparatus 1, is constituted by, for example, an RISC-CPU.

Then, when the power supply of this entertainment apparatus 1 is turned ON, the CPU 51 of the control system 50 executes the operating system stored in the ROM 54. As a result, the CPU 51 controls the graphic system 60, the sound system 70, and the like.

Also, when the operating system is executed, the CPU 51 initializes the overall system of the entertainment apparatus 1 such as operation confirmations, and thereafter, controls the optical disk control unit 80 so as to execute such an application program as a game stored in the optical disk. Since this application program of the game is executed, the CPU 51 controls the graphic system 60, the sound system 70, and the like in response to an input entered from a game player, so that the CPU 51 controls an image display and a generation of music sound/effect sound.

Also, the graphic system 60 is equipped with a geometry transfer engine (GTE) 61, a GPU 62, a frame buffer 63, and an image decoder 64. The geometry transfer engine 61 performs a process operation such as a coordinate transfer operation. The GPU 62 executes a graphic operation in response to a graphic operation instruction issued from the CPU 51. The frame buffer 63 stores thereinto an image drawn by this GPU 62. The image decoder 64 decodes such an image data which has been compressed/encoded by executing a quadrature transforming operation such as a discrete cosine transforming operation.

The GTE 61 is provided with a parallel calculating mechanism for executing, for instance, a plurality of calculations in a parallel manner, and executes either a matrix calculation such as a coordinate transfer operation or a vector calculation. Concretely speaking, for instance, in such a case that an application program such as a game recorded on the optical disk utilizes a so-called "3D (three-dimensional) graphics", this GTE 61 may constitute a 3-dimensional virtual object by way of a subset of triangle-shaped polygon. Then, the GTE 61 performs various sorts of calculations used to produce such an image which is obtained by photographing this 3-dimensional object by using a virtual camera. In other words, this GTE 61 executes a perspective transformation and the like in the case that rendering is carried out (namely, calculation of coordinate value in the case that vertexes of respective polygons for constituting 3-dimensional object are projected on virtual camera screen).

In response to a command issued from the CPU 51, the GPU 62 forms an image by executing the rendering of the 3-dimensional object with respect to the frame buffer 63, while using the GTE 61, if required. Then, the GPU 62 outputs a video signal indicative of the formed image. It should be understood that as a manner for a hidden-line removal and a hidden-surface removal employed in rendering, the following manners are used, i.e., the Z buffer method, the scan line method, the ray tracing method, and the like. Also, as a shading manner for making a shade, the flat shading method, the glow shading method, the ray tracing method, and the like are used. Further, as a manner for representing a surface material and a pattern of surfaces of the three-dimensional object, texture mapping may be employed.

The frame buffer 63 is arranged by a so-called "dual port RAM", by which the rendering operation of the GPU 62, the transfer operation from the main memory, and the data reading operation from the main memory for display purposes can be carried out at the same time. In addition to the image area in which the rendering operation and the reading operation for the display purpose are carried out, a texture area is provided in this frame buffer 63, into which a texture used in the above-explained texture mapping is stored.

The image decoder 64 decodes either image data of a still picture or image data of a moving picture, which are stored in the main memory 53, and then stores the decoded image data into the main memory 53 under control of the CPU 51, Also, since this reproduced image data is stored via the GPU 62 into the frame buffer 63, this reproduced image data may be utilized as a background of an image which is rendering-processed by the above-mentioned GPU 62.

The sound system 70 is equipped with an SPU 71 and a sound buffer 72. The SPU 71 outputs such an audio signal as music sound/effect sound in response to an instruction issued from the CPU 51. The sound buffer 72 is to store thereinto waveform data and the like, which are processed by this SPU 71.

The SPU 71 is provided with an ADPCM (adaptive differential pulse code modulation) decoding function, a reproducing function, and a modulating function, and the like. The ADPCM decoding function may reproduce the speech (voice) data which is processed by the ADPCM operation. The reproducing function may reproduce the waveform data stored in the sound buffer 72, so that the audio signal such as the effect sound may be reproduced to be outputted. The modulating function may modulate the waveform data stored in the sound buffer 72. Since such functions are provided, this sound system 70 may be arranged as a so-called "sampling sound source" which may produce the audio signal such as the music sound and the effect sound based upon the waveform data which are stored in the sound buffer 72 in response to an instruction issued from the CPU 51.

The optical disk control unit 80 is equipped with an optical disk apparatus 81, a decoder 82, and a buffer 83. The optical disk apparatus 81 reproduces a program, data, and the like, which are recorded on the optical disk. The decoder 82 decodes a program, data, and the like, for example, to which an error correction code (ECC) is added, and which is recorded as the ECC-coded program/data. The buffer 83 temporarily stores thereinto data supplied from the optical disk apparatus 81, so that the data reading operation from the optical disk may be carried out in a high speed. A sub-CPU 84 is connected to the decoder 82.

It should also be noted that as speech data which has been recorded on the optical disk and is read by the optical disk apparatus 81, there is so-called "PCM data " in addition to the above-described ADPCM data. This PCM data is produced by A/D-converting an audio signal. After the ADPCM data is decoded by the decoder 8, the decoded ADPCM data is supplied to the above-described SPU 71. In this SPU 71, such a process operation as a digital-to-analog converting operation is performed as to this supplied ADPCM data, and thereafter, the processed ADPCM data is outputted as music sound/effect sound from an acoustic apparatus such as an audio appliance connected to this entertainment apparatus 1. Also, such a process operation as digital-to-analog converting operation is carried out as to PCM data in the SPU 71, and thereafter, the processed PCM data is outputted as music sound/effect sound from the acoustic apparatus in a similar manner.

Next, the communication control unit 90 is equipped with a communication control machine 91 for executing a communication control operation via a bus BUS with the CPU 51. The communication control machine 91 is provided with an operation apparatus connecting unit 12, a memory card 26, and memory card inserting units 8A/8B. The controller 20 used to enter an instruction issued from a player is connected to the operation apparatus connecting unit 12. The memory card 26 is employed as an auxiliary storage apparatus capable of storing thereinto setting data of a game, and the like. The portable electronic appliance 100 and the like are connected to the memory card inserting units 8A and 8B.

In response to an instruction sent from the communication control machine 91, the controller 20 connected to the operation apparatus connecting unit 12 transmits the conditions of the above-explained various buttons and the condition of the operation unit by way of the synchronous communication manner so as to input the instruction issued from the player. Then, the communication control machine 91 transmits the statues of either the respective buttons or the operation unit of the controller 20 to the CPU 51.

As a result, the instruction supplied from the player is entered into the CPU 51, and thus, this CPU 51 executes such a process operation in accordance with this instruction issued from the player based upon the game program and the like under execution. Concretely speaking, the CPU 51 produces an image containing an object to be operated in conjunction with other units of the control system 50 and the graphic system 60, and causes the produced image to be displayed on the display screen of the display apparatus. Then, in response to instructions issued from the game player, which are inputted in the controller 20, the CPU 51 sequentially produces images (also, background scenes thereof are changed, if necessary) in which display positions and display conditions of the object to be operated are changed, and then, sequentially displays these produced images on the display screen of the display apparatus. As a consequence, the CPU 51 produces a moving picture (moving image) as follows. That is, it seems as if the object to be operated were operated in response to the operation content of the player, which is inputted from the controller 20. Also, the CPU 51 controls the speech and the music to be outputted from the voice apparatus in conjunction with the sound system 70, if necessary.

In this case, when the program is read, the image is displayed, and/or the image is drawn among the main memory 53, the GPU 62, the image decoder 64, and the decoder 82, the image data must be transferred in a high speed. To this end, in this entertainment apparatus 1, as explained above, a so-called "DMA transfer operation" may be carried out, That is to say, under control by the peripheral device control unit 52, the data is directly transferred among the main memory 53, the GPU 62, the image decoder 64, and the decoder 82 without via the CPU 51. As a consequence, the work load given to the CPU 51 caused by the data transfer operation may be reduced, so that such a high speed data transfer operation can be carried out.

Also, when the setting data of the game under execution is required to be stored, the CPU 51 transmits this setting data to be stored to the communication control machine 91, and this communication control machine 91 writes the data transmitted from the CPU 51 into the memory card 26 and the portable electronic appliance 100, which are loaded on the memory card inserting unit 8A, or 8B.

In this case, a protection circuit capable of preventing the entertainment apparatus 1 from being electrically destroyed is built in the communication control machine 91. Since the memory card 26 and the portable electronic appliance 100 are separated from the bus BUS, these memory card 26 and portable electronic appliance 100 may be detachably loaded under such a condition that the power supply of the apparatus main body is turned ON. As a result, in such a case that either the memory card 26 or the portable electronic appliance 100 is short of a storage capacity, a new memory card may be inserted without interrupting the power supply of the apparatus main body. Accordingly, while such game data required to be backed up is not lost, such a new memory card may be loaded and the necessary data may be written into this new memory card.

It should also be noted that both a parallel I/O interface (FIO) 96 and a serial I/O interface (SIO) 97 correspond to such interfaces used to connect the memory card 26 and the portable electronic appliance 100 to the entertainment apparatus 1.

As described above, the hardware structure of the entertainment apparatus 1 has been explained.

Next, in the entertainment apparatus 1 with employment of the above-explained structure, a description will now be made of a game which is realized by such that the CPU 51 executes an application program read out from the optical disk loaded on the disk loading unit 3.

It should also be noted that games which are realized by the entertainment apparatus 1 according to this embodiment mode, correspond to such games as a PRG (role playing game), an AVG (adventure game), and an SLG (simulation game), namely, while subsequent developments of a game are changed in response to an instruction of a game player, which is accepted via the controller 20, a story of this game is progressed. Both a game screen and an instruction selection screen are displayed on the display screen of the display apparatus. The game screen displays a picture (game picture, or game video) which represents a story progressed in response to an instruction content of a player. The instruction selection screen is used to instruct/select developments of the story by the player via the controller 20. As a result, while the player confirms the story via the game screens displayed on the display screen, the player may enjoy developments of various stories by issuing a desirable instruction via the designation/selection screen, or by selecting a desirable item.

First, a data structure of an optical disk will now be explained.

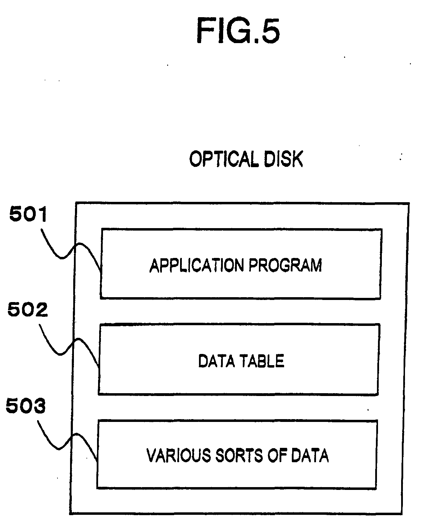

Fig. 5 is a diagram for explaining a data structure of an optical disk loaded on the disk loading unit 3.

As shown in this drawing, an application program 501 used to realize a game, a data table 502 to which the application program 501 refers while calculating an atmosphere, and also various sorts of data (namely, picture data, voice data, character data, and the like) 503 which are used by the application program 501 are recorded on the optical disk,

Next, a description will now be made of a software structure constructed on the entertainment apparatus 1.

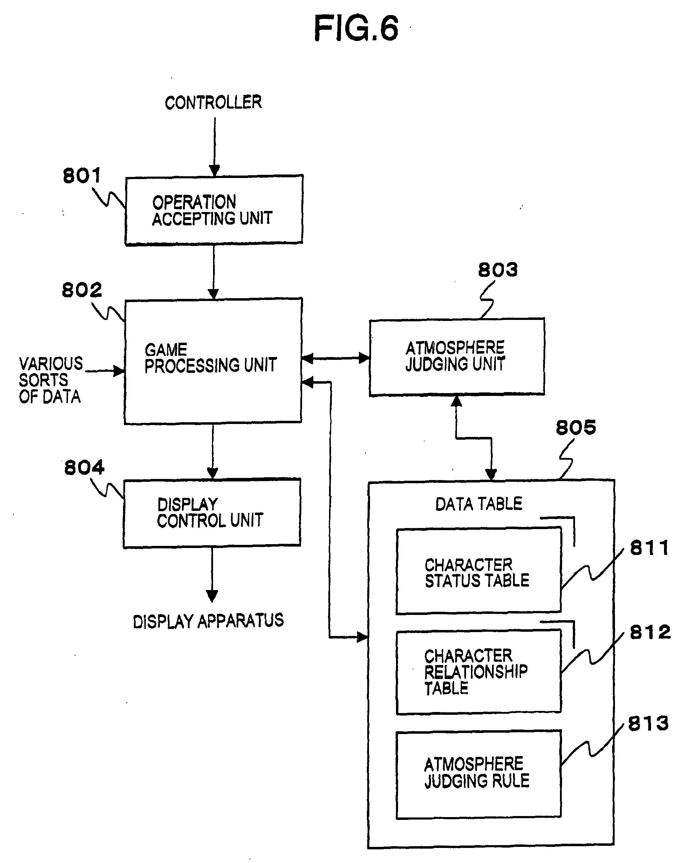

Fig. 6 is a schematic block diagram for representing a software construction constituted on the entertainment apparatus 1. It should be understood that the .respective structural elements shown in this drawing are embodied as a process and the like by that the CPU 51 executes an application program 501. This application program 501 is read out from the optical disk loaded on the disk loading unit 3 by the optical disk control unit 130, and then is loaded on the main memory 53. While these software structural elements are read, the various sorts of data 503 stored in the optical disk are read out, if required, and then, the read data are stored in the main memory 53.

In Fig. 6, an operation accepting unit 801 may be realized by that the CPU 51 uses the communication control machine 91. The operation accepting unit 801 transfers an instruction of a game player, which is accepted via the controller 20, to a game processing unit 802.

The game processing unit 802 reads out necessary data from the main memory 53 in order to progress a game story in response to the instruction of the player, which is notified from the operation accepting unit 801. Then, the game processing unit 802 produces game image data containing a picture indicative of the story. Thereafter, the game processing unit 802 transfers the produced each screen data to a display control unit 804.

It should also be noted that the process operations executed in this game processing unit 802 are basically identical to the process operations which are required in the existing games of the PRG, the AVG, and the SLG.

An atmosphere judging unit 803 accepts an atmosphere judging request issued from the game processing unit 802, and judges an atmosphere of a relevant scene in a virtual world present in a story progress with reference to a data table 805.

The display control unit 804 may be realized by using the GPU 62 by the CPU 51. This display control unit 804 executes a synthesizing process operation with respect to image data which is transferred from the game processing unit 802 so as to produce display screen data. Then, the produced display screen data is outputted to the display apparatus. Upon receipt of this display image data, the display apparatus displays such an image on the display screen in accordance with the display image data.

The data table 805 contains a character status table (TBL) 811, a character relationship table (TBL) 812, and an atmosphere judging rule 813.

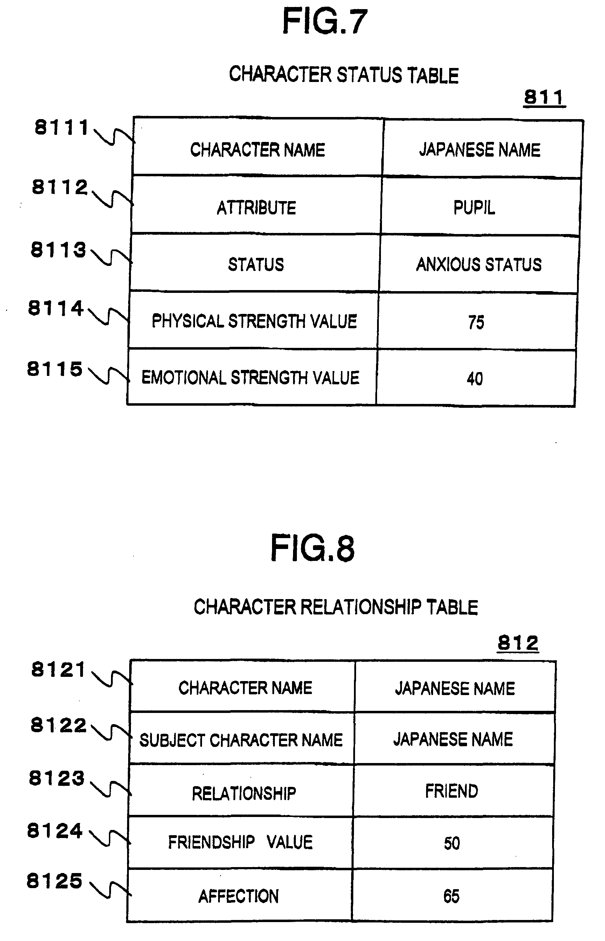

The character status table TBL 811 corresponds to such a table for storing thereinto statuses of characters appearing in a game. These character statuses are managed every character. The character statuses table TBL 811 may be made of, for example, such a structure as shown in Fig. 7.

In this drawing, the character status table TBL 811 is provided with a character name 8111, an attribute 8112, a status 8113, a physical strength value 8114, and an emotional strength value 8115.

The character name 8111 corresponds to such an item used to identify a name of a character which is indicated by a status table. Names which have been previously determined with respect to a game story are set into the character name 8111.

In the attribute 8112, attributes of characters are set. For instance, when a "school" is set as a game scene, a "pupil", a "teacher", a "chairperson", and the like may be set as these attributes. As to this item, attributes which have been previously determined on the game story are set.

As to the status 8113, statuses of characters are set. As these statuses for example, "anxious", "disappointed", "happy", "cheerful", "normal", and the like may be set. The status 8113 is dynamically changed by the game processing unit 802 in response to a story development. For example, when a certain character could not get a good point of a test in view of a story development, the game processing unit 802 may change the status 8113 from the "normal" status to the "disappointed" status.

The physical strength value 8114 corresponds to a numeral value indicative of a condition of a physical strength of a certain character. For example, a maximum physical strength value may be selected to be 100, and a minimum physical strength value may be selected to be 0. The physical strength value 8114 may be dynamically changed by the game processing unit 802 in response to a story development. For example, if a certain character trains the martial art, then the physical strength of this character may be improved.

The emotional strength value 8115 corresponds to a numeral value indicative of a condition of an emotional strength of a certain character. For example, a maximum emotional strength value may be selected to be 100, and a minimum emotional strength value may be selected to be 0. The emotional strength value 8115 may be dynamically changed by the game processing unit 802 in response to a story development. For example, it is possible to set the emotional strength value 8115 that if a certain character becomes a lack of sleep, then the emotion strength of this character may be lowered.

The character relationship table TBL 812 corresponds to such a table for storing thereinto a relationship among plural characters appeared in a game. The character relationships are managed every a set of characters. It should also be noted that as to a relationship between a character "A" and a character "B", both a relationship of A to B, and a relationship of B to A may be handled as the same relationship, or may be separately handled. The character relationship table TBL 812 may be made of such a structure as shown in Fig. 8, for example.

In this drawing, the character relationship table TBL 812 is provided with a character name 8121, a subject character name 8122, a relationship 8123, a friendship value 8124, and a affection value 8125.

Both the character name 8121 and the subject character name 8122 correspond to an item used to identify a combination of characters which are indicated by the relation table. Names which have been previously determined in view of the game story are set.

The relationship 8123 corresponds to an item used to set a relationship among the characters established on the game story. For example, a "friend", a "close friend", a "lover", an "enemy", and the like may be set as this relationship 8123. Also, as to this item, relationships which are previously set in view of the game story are set. Apparently, the game processing unit 802 may change this relationship 8123 in accordance with a story development.

Both the friendship value 8124 and the affection value 8125 corresponds to items used to set numeral values indicative of degrees of friendship and love among the respective characters. As to these numeral values, for example, "100" is selected to be a maximum value, and "0" is selected to be a minimum value. At the game starting time, default values which are determined in view of the game story are stored in these numeral values. After the game has commenced, the game processing unit 802 dynamically changes these numeral values in response to the game development.

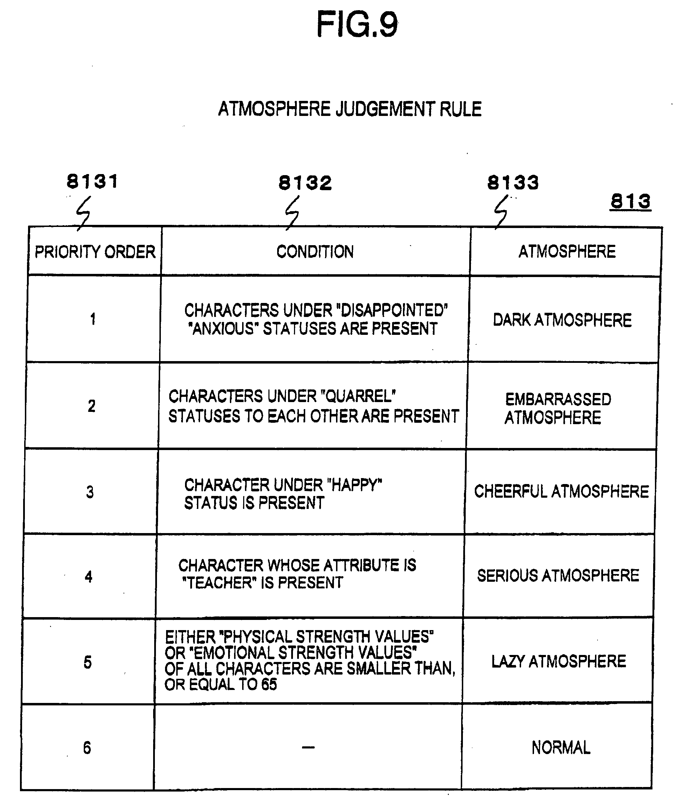

The atmosphere judging rule 813 corresponds to. such a table in which a rule for judging an atmosphere of a scene is recorded. That is, rules which have been previously determined in view of the game story are set as the atmosphere judging rule 813. This atmosphere judging rule 813 may be made of, for example, such a structure as shown in Fig. 9.

In this drawing, the atmosphere judging rule 813 is provided with a priority order 8131, a condition 8132, and an atmosphere 8133. It is so judged that an atmosphere corresponding to a satisfied condition may be judged as an atmosphere of a scene. In this case, the priority order 8131 represents a priority order used to judge this condition. In other words, in such a case that a plurality of conditions can be satisfied, it is so judged that such an atmosphere corresponding to a condition having the highest priority order is equal to an atmosphere of a scene.

As indicated in this drawing, in this embodiment, it is so assumed that the atmosphere 8133 may be determined based upon the content of the character status table TBL 811 appeared in this scene as follows: That is, for instance, in such a case that a character whose status 8133 is either "disappointed" or "anxious" is present in this scene, it is so judged that the atmosphere 8133 corresponds to "dark." Apparently, the atmosphere judging rule is not limited to this example, but may be determined by employing, for example, the friendship value 215 and the affection value 216 contained in the character relationship table 812, and/or may be determined based upon other parameter values used in the game processing unit 812.

Next, a description will now be made of operations of the software structures constructed on the entertainment apparatus 1.

The game processing unit 802 displays an atmosphere of a relevant scene via the display apparatus to a game player, while a game story is progressed. In this embodiment, an atmosphere of a scene may be determined based upon statuses of characters appeared in this scene, attributes of these characters, and a relationship among these characters. As a consequence, in the case that there is any change in the characters appeared in this scene while the game story is progressed, the game processing unit 802 requests the atmosphere judging unit 803 to judge the atmospheres when the scene is changed.

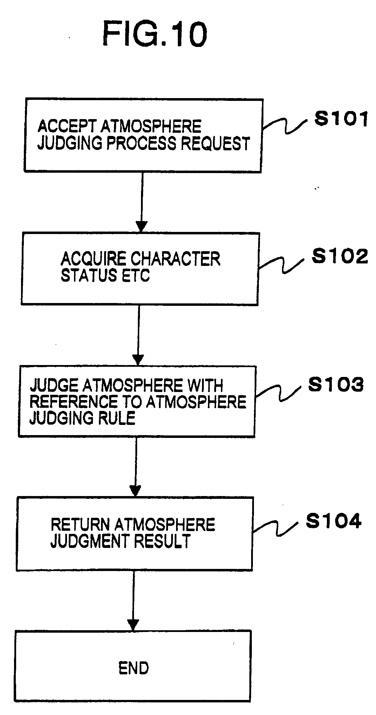

Fig. 10 is a flow chart for explaining operations of the atmosphere judging unit 803 in such a case that the atmosphere judging process operation is requested from the game processing unit 802.

When the atmosphere judging unit 803 accepts a request of such an atmosphere judging process operation (step S101), this atmosphere judging unit 803 accepts a list 300 of characters who appear in this scene from the game processing unit 802.

The atmosphere judging unit 803 which has accepted both the atmosphere judging process request and the character list 300 acquires the statuses 8113, the attributes 8112, the physical strength values 8114, and the emotional strength values 8115 with respect to the characters listed in the character list 300 with reference to the character status table TBL 811 (step S102).

Then, the atmosphere judging unit 803 judges as to whether or not the acquired character statuses 8113 and the like may correspond to the conditions with reference to the conditions of the atmosphere judging rule 813 (step S103). In this case, it is so assumed that the atmosphere judging unit 803 sequentially checks the character status in the order of such conditions having the higher priority orders, and then, determines the atmosphere corresponding to the relevant conditions.

The atmosphere judging unit 803 transfers the determined atmosphere to the game processing unit 802 (step S104), and then accomplishes the atmospheric judging process operation.

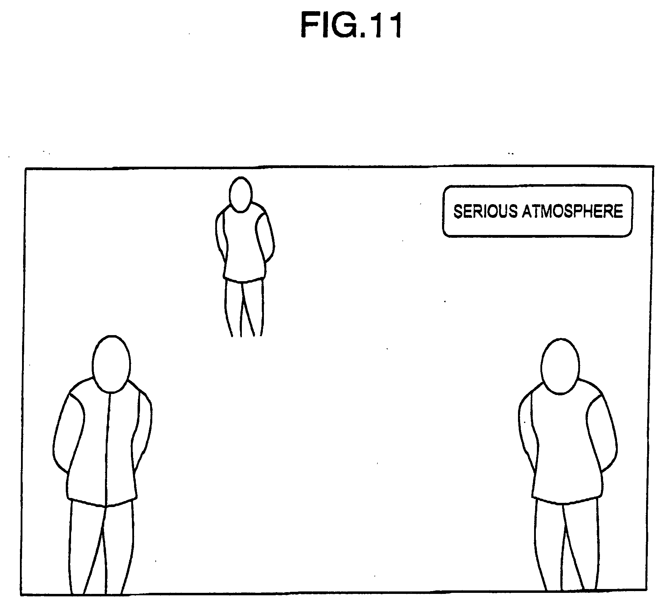

The game processing unit 802 which has accepted the atmosphere judged by the atmosphere judging unit 803 arranges such a language indicative of an atmosphere of a scene on a game screen, and displays this arranged language via the display control unit 804 on the display apparatus. Fig. 11 is an illustration for representing an example of one scene of a game where an atmosphere is displayed. In this drawing, such an atmosphere of a scene, i.e., "serious atmosphere" is indicated at an upper right position of a screen.

It should be understood that the method of representing the atmosphere is not limited to such a language, but also may be realized by employing, for instance, an icon corresponding to an atmosphere, and a symbol of a figure.

The game processing unit 802 may apply any change to a player character, or actions of other characters in response to an atmosphere of a scene.

For instance, in such a case that as actions with respect to other characters which can be selected by a player character in view of a game story, "request", "encourage", "converse", "consult", "apologize", and the like are set, if an atmosphere of a scene corresponds to "embarrassed atmosphere", then the player character may not select such an action of "request."

Alternatively, in the case that another character is set to say his lines in view of a game story, if an atmosphere of a scene corresponds to "depressed atmosphere", then this character may speak in a "low voice."

Also, for instance, under such a condition that an atmosphere of a scene corresponds to "cheerful atmosphere", in the case that such a character whose status is "anxious" appears and the atmosphere of this scene becomes "depressed atmosphere", the game processing unit 802 may judge that "cheerful atmosphere" collapses, and therefore, may lower the friendship values 215 with respect to the characters who appear in this game story.

It should also be noted that the outer view and the hardware construction of the entertainment apparatus according to the present invention are not limited to those as indicated in Fig. 1, Fig. 2, and Fig. 4. Alternatively, the entertainment apparatus of the present invention may be manufactured by employing an arrangement of a general-purpose information processing apparatus, for example, a CPU; a memory; an external storage apparatus such as a hard disk apparatus; a reading apparatus for reading data from a portable storage medium such as a CD-ROM and a DVD-ROM; an input apparatus such as a keyboard and a mouse; a display apparatus such as a display device; a data communication apparatus for executing a communication via a network such as the Internet; and also an interface for transmitting/receiving data among the above-explained respective apparatuses.

Also, the program and the various sorts of data which are used to constitute the software structure shown in Fig. 6 on the entertainment apparatus may be read out from a storage medium having a portability characteristic via a reading apparatus, and then may be stored into a memory, an external storage apparatus, and the like. Furthermore, these program/various sorts of data may be downloaded from the network via the data communication apparatus, and then, may be stored into the memory, the external storage apparatus, and the like.

As previously described, in accordance with the present invention, the conceptional idea related to the atmospheres of the scenes in the games can be introduced.

## Claims

1. An entertainment apparatus comprising:
calculation means and storage means; in which;
said calculation means performs a calculation based upon both a game program and data, which are stored in said storage means so as to produce a virtual world, and a character is caused to act within said virtual world so as to progress a game story; wherein:
said calculation means further executes a process operation for judging an atmosphere of a scene of said virtual world, and for representing information related to the judged atmosphere of the scene.

2. An entertainment apparatus as claimed in claim 1 wherein:
said calculation means manages a status of a character appeared in the game, and judges the atmosphere of the scene based upon the status of the character appeared in said scene.

3. An entertainment apparatus as claimed in claim 1 wherein:
said entertainment apparatus is further comprised of:
operation means for accepting an operation issued from a player and for causing the character to execute an action in accordance with the accepted operation; and
said calculation means changes a sort of operations by which the player can cause the character to act in response to the judged atmosphere of said scene.

4. A program used to produce a virtual world and also to execute a game in which a character acts, who appears in said virtual world, so that a story of the game is progressed, wherein:
said program causes an information processing apparatus to executes:
a process operation for judging an atmosphere of a scene of said virtual world; and
a process operation for representing an information related to the judged atmosphere of the scene.

5. A program as claimed in claim 4 wherein:
said program further causes the information processing apparatus to execute a process operation for managing a status of a character appeared in the game; and
the atmosphere of the scene is judged in accordance with the status of the character appeared in said scene.

6. A program as claimed in claim 4 wherein:
said program further causes the information processing apparatus to execute a process operation for accepting an operation issued from a player and for causing the character to perform an action in response to the accepted operation; and
a sort of action by which the player can cause the character to execute is changed in response to the judged atmosphere of the scene.

7. An information processing apparatus-readable recording medium which stores therein the program as claimed in any one of Claims 4 to 6.
